# EUROPÄISCHE PATENTANMELDUNG

(11) **EP 3 079 215 A1**
(43) Veröffentlichungstag der Anmeldung: **12.10.2016**
(21) Anmeldenummer: 16000785.2
(22) Anmeldetag: 06.04.2016
(51) Int. Cl.: H02H 3/06, H02H 3/08, H02H 3/093, H02H 3/10, H02H 3/20

(54) **VERFAHREN ZUR VERBESSERTEN ABSICHERUNG EINES ELEKTRONISCHEN GERÄTES GEGEN ÜBERSTROM UND ÜBERSPANNUNG, SOWIE NACHRÜSTSATZ ZUR UMSETZUNG DIESES VERFAHRENS**

(30) Priorität: 07.04.2015 DE 102015004264
(71) Anmelder: Rixen, Wolfgang, 42699 Solingen (DE); Bühler, Fred, 42653 Solingen (DE)
(72) Erfinder: Rixen, Wolfgang, 42699 Solingen (DE); Bühler, Fred, 42653 Solingen (DE)
(74) Vertreter: Draudt, Axel Hermann Christian

(57) **Zusammenfassung**

Die Erfindung betrifft ein Verfahren zur verbesserten Absicherung eines elektronischen Gerätes (2) gegen unzulässig hohe Ströme. Sie ist anwendbar für elektronische Geräte (2), die über einen externen, wenigstens ein Anschluss-kabel aufweisenden Stromzufuhrweg (L) mit einer Spannungsquelle verbindbar sind und eine austauschbare, in eine Kontaktaufnahme eingesetzte Feinsicherung aufweisen, die derart zwischen das elektronische Gerät (2) und eine dieses versorgende Spannungsversorgung (L,N,S) geschaltet ist, dass sie in einem insbesondere durch einen unzulässig hohen Strom charakterisierten Fehlerfall den Stromfluss zu dem elektronischen Gerät (2) zu unterbrechen vermag.

Feinsicherungen sind zum einen träge und haben zum anderen den Nachteil, dass sie aufgrund des relativ hohen Widerstandes die Signalgüte des eingespeisten Stroms negativ beeinflussen können. Um diesen Nachteil zu vermeiden, wird erfindungsgemäß die Feinsicherung entfernt und anstelle der Feinsicherung eine elektrische Überbrückung bzw. Trennung mit geringem elektrischen Widerstand in die Kontaktaufnahme eingesetzt und das elektronische Gerät (2) über eine externe oder interne, elektronische Sicherungsschaltung (1) abgesichert, wobei die elektronische Sicherungsschaltung (1) außerhalb bzw. innerhalb des elektronischen Gerätes (2) des Stromzufuhrweges (L) angeordnet ist.

## Beschreibung

Die Erfindung betrifft ein Verfahren zur verbesserten Absicherung eines elektronischen Gerätes, u.a. gegen Folgeschäden durch unzulässig hohe Ströme oder unter Verbesserung der Signalgüte der Spannungsversorgung. Dieses Verfahren eignet sich für elektronische Geräte, die über einen externen, wenigstens ein Anschlusskabel aufweisenden Stromzufuhrweg mit einer Spannungsquelle verbindbar sind und eine austauschbare, in eine Kontaktaufnahme eingesetzte Feinsicherung aufweisen. Eine solche Feinsicherung ist in dem elektronischen Gerät derart verbaut, dass sie in einem insbesondere durch Überspannungen oder Überstrom charakterisierten Fehlerfall den Stromfluss zu den empfindlichen elektronischen Bauteilen in dem Gerät selbsttätig, in der Regel durch Schmelzen eines Schmelzdrahtes, zu unterbrechen vermag.

Eine Feinsicherung kann bei elektronischen Geräten Folgeschäden der Bauteile durch unzulässig hohe Ströme durch interne Defekte nicht immer vermeiden. Sie hat den Nachteil, dass sie zum einem vergleichsweise träge reagiert und zum anderen, dass die Abschaltcharakteristik einen großen Unsicherheitsbereich aufweist. So ist es möglich, dass bis zum Auslösen der Sicherung schon massive Schäden im Gerät entstanden sind.

Ein weiterer Nachteil der Feinsicherung besteht darin, dass bei Verwenden einer Feinsicherung aufgrund ihres im Vergleich zu einem Netzkabel relativ hohen indifferenten Widerstandes der Stromfluss behindert wird. Dies führt insbesondere bei pulsbelasteten stromempfindlichen Geräten wie z.B. HiFi-Geräten zu negativen klanglichen Folgen.

Insbesondere bei HiFi-Geräten, aber auch bei Geräten zur Signalübertragung oder sonstigen elektronischen Geräten, kann die Feinsicherung die Signalgüte so negativ beeinflussen, dass dies Auswirkungen auf das eigentliche Nutzsignal hat.

Bei vielen bereits vorhandenen elektronischen Geräten und auch bei vielen derzeit angebotenen Geräten, insbesondere HiFi-Geräten, wird jedoch weiterhin als Sicherung bzw. Sicherungselement die auf dem Metallfaden beruhende Feinsicherung verwendet, bei der der Metallfaden bei einem Überstrom durchbrennen soll. Nach DIN 72581 muss eine Feinsicherung beim 10-fachen Nennstrom innerhalb einer vorbestimmten Zeit, die bei einer trägen Sicherung etwa 0,2 s beträgt, ansprechen. Dies entspricht bei einer 1A-Sicherung und einer Netzspannung von 230 V bis zum Ansprechen einer Leistungsaufnahme von 2.300 W. Die dadurch entstehende Wärmeentwicklung kann zu erheblichen Schäden in dem durch die Feinsicherung abgesicherten elektronischen Geräten führen.

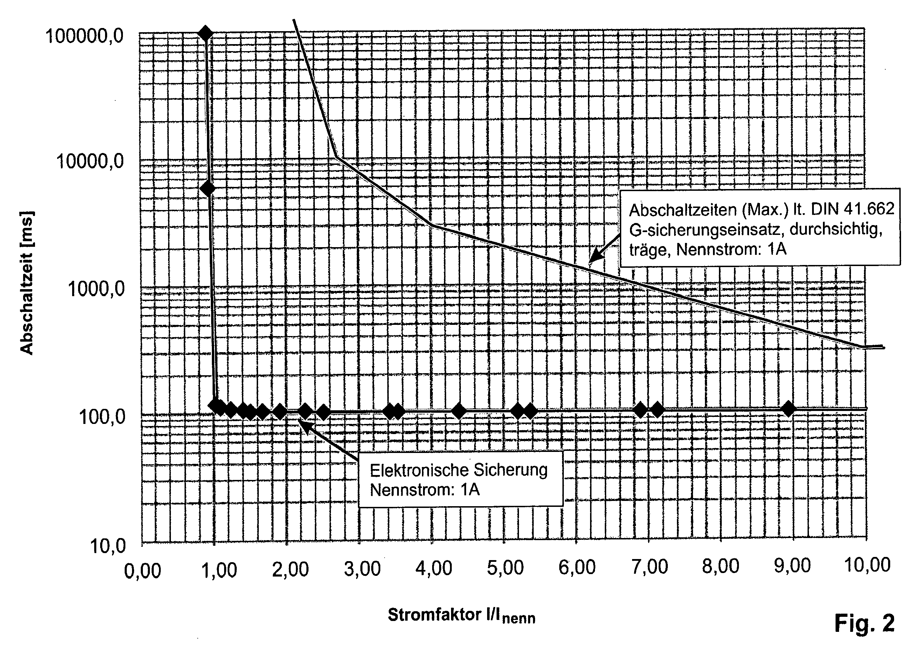

Bei einem geringeren Überstrom, beispielsweise dem 1,5-fachen Nennstrom, ist es möglich, dass dieser Überstrom über eine längere Zeit hinweg fließt, beispielsweise über Minuten oder sogar über Stunden hinweg, ohne dass die Feinsicherung auslöst. Dieser Zusammenhang ist in der Figurenbeschreibung zu Figur 2 grafisch dargestellt. Die Grafik zeigt eindrucksvoll wie groß der Toleranzbereich einer Feinsicherung ist. Durch die Feinsicherung lässt sich daher keine vollständig befriedigende Absicherung des elektronischen Gerätes erzielen.

Um einen besseren Schutz von elektronischen Geräten zu erreichen, ist es bekannt, in ihnen zusätzliche Schutzmechanismen vorzusehen.

Beispielsweise offenbart die DE 24 05 501 A1 eine elektronische Sicherung für Leistungsverstärker zur Musikwiedergabe, insbesondere für Stereo-Wiedergabe, die bei zu hoher Belastung der Endstufentransistoren eine Verminderung des diese Transistoren durchfließenden Stromes bewirkt, der durch in dem Stromkreis angeordnete Widerstände gemessen wird. Hierbei ist ein in Abhängigkeit von dem Endstufenstrom angesteuertes, nach Übersteigen des Schwellwertes ansprechendes und rasch schaltendes Kippglied vorgesehen, durch dessen Kippen ein Sperren der Leistungstransistoren während einer vorgegebenen Zeitspanne erfolgt. Das Kippglied kippt spätestens mit Ablauf dieser Zeitspanne zurück. Der Ausgang des Kippgliedes ist zu einer Eingangsstufe des Leistungsverstärkers geführt und sperrt diese durch sein Kippen. Als Kippglied wird ein Operationsverstärker verwendet.

Aus der US 5,303,114 A ist ein Überlastschutzkreis bekannt, der geeignet ist, den durch eine hochkapazitiven Last oder einer anderen Last auftretenden erheblichen Einschaltstrom abzufangen. Der Überlastschutzkreis enthält einen Schalter, der im Falle eines Fehlers schnell genug geöffnet wird, um eine Fehlerübertragung zu minimieren. Zum Vermeiden eines Schwingens beim Übergang des Systems von dem eingeschalteten in den ausgeschalteten Zustand und umgekehrt ist ein Vergleicher in Verbindung mit einem Widerstand vorgesehen, der eine Hysterese zeigen.

Aus der DE 19 41 694 A1 ist ein Überlastschutz für die beiden Transistoren einer im B-Betrieb arbeitenden, eisenlosen Gegentakt-Endstufe eines Niederfrequenzverstärkers bei einem Kurzschluss der Lautsprecherleitung oder bei zu kleinem Lautsprecherwiderstand bekannt, wobei die beiden folgenden, voneinander unabhängig arbeitenden elektronischen Sicherungen vorgesehen sein können. Einerseits ist dies eine Schaltung zum Herunterregeln der Aussteuerung durch Sperrung einer oder mehrerer Transistoren des Verstärkers, bei der eine dem Kollektorwechselstrom der Transistoren der Endstufe entsprechende Gleichspannung durch Gleichrichtung gewonnen wird, die einen Kondensator auflädt und die im normalen Betrieb durch die entgegen gerichtete, durch Gleichrichtung der Kollektorwechselspannung gewonnene Gleichspannung kompensiert ist und die im Falle des Kurzschlusses oder eines zu kleinen Lautsprecherwiderstandes wegen Fortfalls oder Verringerung der Kompensationsspannung wirksam wird und die Aussteuerung der Endstufe herabsetzt.

Eine zweite Sicherung besteht in einer Schaltung zur Begrenzung des Wechselstroms in den Transistoren der Endstufe, bei der von den Emitter- bzw. Kollektorwiderständen der Endstufe je eine Wechselspannung entnommen und der Basis je eines Hilfstransistors zugeführt wird, dessen Kollektorspannung bei zu großem Kollektorwechselstrom die Basisspannung des zugehörigen Transistors der Endstufe im Sinne einer Verminderung des Kollektorwechselstroms ohne nennenswerte Zeitkonstante herunterregelt.

Aus der DE 20 58 891 B ist eine Schaltungsanordnung zum Schutz gegen Überlastung für die Leistungstransistoren einer Gegentaktendstufe unter Verwendung eines Schutztransistors, der an einem im Versorgungsstromkreis eines Leistungstransistors angeordneten Widerstand angeschaltet ist. Der Leistungstransistor wird durch den im Überlastfall an dem Widerstand auftretenden erhöhten Spannungsabfall bei Überschreiten eines für ihn vorgegebenen Schwellwertes angesteuert. Der Schutztransistor ist ferner ausgangsseitig an die Eingangselektrode eines Vorstufentransistors angeschlossen und greift unmittelbar bei jeder Halbwelle des durch den Leistungstransistor fließenden Stroms wirksam in die Ansteuerung der Endstufe ein.

Ein Nachteil aller dieser Schaltungen ist jedoch, dass sie im wesentlichen ausgangsseitig ansetzen, d.h. den Ausgangsstrom begrenzen aber einen zu einen Kurzschluss führenden internen Fehler im Gerät, wie durch Netzüberspannungen hervorgerufene oder alterungsbedingte Defekte an Bauteilen, nicht abdecken können. Auch müssen sie bereits herstellerseitig vorgesehen werden und sind damit, trotz eventueller Nachteile, dem Benutzer in der Regel nicht zugängig.

Der vorliegenden Erfindung liegt nun die Aufgabe zugrunde, ein Verfahren zur verbesserten Absicherung eines elektronischen Gerätes zu schaffen, das auch den Nutzern von Geräten mit Feinsicherung zugänglich ist. Ferner stellt sich die Erfindung die Aufgabe, bestehende Geräte besser abzusichern und den Stromfluss weniger zu behindern.

Die Aufgabe bezüglich des Verfahrens wird erfindungsgemäß durch ein Verfahren und einem Nachrüstsatz nach Anspruch 1 gelöst.

Erfindungsgemäß wird nun die Feinsicherung entfernt und anstelle der Feinsicherung eine elektrische Überbrückung in Form eines z.B. massiven Metallstift mit geringem elektrischem Widerstand in die Kontaktaufnahme eingesetzt. Ferner wird, da nun,die Sicherung überbrückt und damit deaktiviert ist, das elektronische Gerät über eine externe, elektronische Sicherungsschaltung abgesichert. Diese externe, elektronische Sicherungsschaltung wird außerhalb des elektronischen Gerätes innerhalb des Stromzufuhrweges angeordnet.

Es sind verschiedene Ausführungen der elektronischen Sicherung denkbar:

Sofern das elektronische Gerät, wie schon zuvor erläutert, ein Versorgungskabel besitzt, das lösbar mit dem Gehäuse des elektronischen Gerätes verbunden ist, kann die elektronische Sicherungsschaltung in einem geeigneten Gehäuse auch als Bestandteil eines Kabels zwischen dem Netzstecker und der Buchse des elektronischen Gerätes vorgesehen sein.

Im Fall, dass das Versorgungskabel fest mit dem Gerät verbunden ist, kann beispielsweise die elektronische Sicherungsschaltung in Form eines separaten Netzsteckgehäuses zwischen dem Gerät und der Stromversorgung vorgesehen werden, in dem der Stecker des Zuführkabels des Gerätes eingesteckt wird.

Schließlich ist es auch möglich, die elektronische Sicherungsschaltung in das Gehäuse des elektronischen Gerätes einzubauen. Hierzu kann beispielsweise ein kompakt gehaltenes Gehäuse der elektronischen Sicherungsschaltung verwendet werden, dass in den üblicherweise vorhandenen freien Platz innerhalb des Gehäuses angebracht wird. Die entsprechende elektrische Verbindung zwischen elektronischen Sicherungsschaltung und dem Spannungseingang des elektronischen Gerätes sowie des Anschlusskabels muss dann natürlich hergestellt werden. Dies kann entweder durch Trennen der bestehenden Verkabelung erfolgen oder dadurch erfolgen, dass das eigentliche Anschlusskabel in das Gehäuse eingeführt wird und dort mit dem Gehäuse der elektronischen Sicherungsschaltung verbunden wird.

Auch ist es denkbar, nach dem Entfernen der internen Feinsicherung aus dem Sicherungshalter die Verbindung mit der elektronischen Sicherung direkt am Sicherungshalter durch einen mitgelieferten Steckadapter durchzuführen. Dieser Adapter oder Klemmblock besteht dann aus einem isolierenden Element mit endseitig angebrachten Metallkontakten, die gleichzeitig den Anschluss von zwei Kabeln zulassen, passend zum Halter der Feinsicherung. Diese sind wiederum mit der elektronischen Sicherung verbunden, die dann den Stromfluss in die Elektronik des Gerätes überwacht und diesen im Fehlerfall unterbricht.

Üblicherweise wird jedoch die elektronische Sicherungsschaltung vollständig außerhalb des elektronischen Gerätes vorgesehen sein. Bei den meisten elektronischen Geräten ist die als Feinsicherung eingesetzte Schmelzsicherung austauschbar, damit sie im Falle eines Auslösens der Sicherung zur Reaktivierung des Gerätes erneuert werden kann. Teilweise wird ein Schraubeinsatz verwendet, in dem die Feinsicherung eingesetzt ist und der beim Einschrauben in die dann als Gewindebohrung ausgebildete Kontaktaufnahme zwei Kontakte unter Einschluss der Feinsicherung überbrückt, so dass das elektronische Gerät mit der Versorgungsspannung verbunden ist.

Teilweise ist auch die Feinsicherung im Gehäuse der Netzsteckerbuchse oder in einem internen Sicherungshalter untergebracht. In jeden dieser Fälle kann aber die Feinsicherung ohne übermäßigen Aufwand durch einen geeigneten Metallstift ersetzt werden.

Der Austausch der Feinsicherung ist aber nicht zwingend erforderlich, wenn nur ein verbesserter Schutz des Gerätes wie beispielsweise bei einem teuren medizintechnischen Gerät im Vordergrund steht. In diesem Fall ist es sogar vorteilhaft, die Feinsicherung zur zusätzlichen Absicherung beizubehalten.

Unter elektronischem Gerät muss nicht zwangsläufig ein einzelnes Gerät verstanden werden, es kann sich auch um mehrere Geräte handeln, die über eine zentrale Zugangssicherung abgesichert werden. Die elektronische Sicherungsschaltung kann an beliebiger Stelle in der Stromversorgung der elektronischen Geräte angeordnet werden. Denkbar ist auch der Einsatz der elektronischen Sicherung an Stelle einer üblichen Haussicherung oder eines Haussicherungsautomaten.

Erfindungsgemäß wird nun anstelle der Feinsicherung ein gut leitender Metallstift als elektrische Überbrückung eingesetzt, der keine Sicherungsfunktion mehr aufweist. Im Gegenzug zum Entfall der Sicherungsfunktion kann aber vermieden werden, dass der Stromfluss durch das ausgetauschte Sicherungselement signalverschlechternd und behindert wird. Die Sicherungsfunktion wird dann von der externen elektronischen Sicherung übernommen. Wie oben bereits dargelegt, kann die elektronische Sicherung in einem Gehäuse angeordnet sein, das unmittelbar in eine Steckdose eingesteckt werden kann. In diesem Fall wird über das geräteeigene Anschlusskabel das elektronische Gerät mit dem Gehäuse der elektronischen Sicherung verbunden. Alternativ kann die bereits beschriebene Anordnung im oder am Gehäuse des elektronischen Gerätes erfolgen. Auch eine Zwischenschaltung durch ein fertiges, mit der elektronischen Sicherung ausgestattetes, Anschlusskabel ist möglich.

Durch die elektronische Sicherungsschaltung kann eine Schaltschwelle einer Überstromabschaltung mit einer hohen Genauigkeit vorgegeben werden. Dadurch können Folgeschäden eines Überstroms an dem angeschlossenen elektronischen Gerät im Vergleich zur Feinsicherung wirkungsvoller vermieden werden. Ferner kann bei Einsatz zB. an HiFi-Geräten - bei gleichzeitigem Ersatz der Feinsicherung durch einen widerstandsarmen Metallstift - dessen Musikwiedergabe deutlich verbessert werden. Die genauere Abschaltcharakteristik der elektronischen Sicherungsschaltung im Vergleich zu einer Feinsicherung, ist speziell bei empfindlichen oder hochpreisigen Geräten ein erheblicher zusätzlicher Vorteil.

Die elektronische Sicherungsschaltung kann bei dem bevorzugten Ausführungsbeispiel der Erfindung dadurch charakterisiert sein, dass zumindest ein Stromsensor und zumindest ein Schaltelement, insbesondere ein Halbleiterschalter oder Relais vorgesehen und in den Stromzufuhrweg zu dem elektronischen Gerät eingekoppelt oder einkoppelbar sind. Mittels des Trennelements wird die Stromzufuhr zu dem elektronischen Gerät im Fehlerfall, also im Falle einer Überlast durch einen konstant zu hohen Strom oder durch Stromspitzen unterbrochen.

Die bevorzugte elektronische Sicherungsschaltung weist zumindest eine dem Stromsensor nachgeschaltete Einrichtung zum Erzeugen einer dem in Richtung des elektronischen Geräts fließenden Strom proportionalen Ist-Gleichspannung, zumindest eine Einrichtung zum Vergleichen dieser Ist-Gleichspannung mit einer vorgebbaren oder einstellbaren Schwellenwert-Spannung, zumindest eine Einrichtung zum Erzeugen einer Ansprechverzögerung der elektronischen Sicherungsschaltung und zumindest ein, in Abhängigkeit von dem Ergebnis des Vergleichs zwischen Schwellenwert/Ist-Spannungs-bei Überschreiten eines vorgebbaren Schwellenwerts, schaltbares oder schaltendes bistabiles Relais auf, das wiederum das Trennelement, insbesondere einen Halbleiterschalter oder ein bistabiles Relais ansteuert.

Dadurch wird eine elektronische Sicherungsschaltung zur Absicherung eines elektronischen Gerätes, insbesondere eines HiFi-Gerätes, geschaffen, bei der die elektronische Sicherungsschaltung bzw. deren Halbleiterschalter oder Relais und ein Stromsensor in den Stromzufuhrweg von der Spannungsversorgung zu dem elektronischen Gerät, wie dem z.B. HiFi-Gerät, eingekoppelt ist bzw. sind. Bei einem Überstrom erfolgt eine Unterbrechung der Stromzufuhr zu dem elektronischen Gerät, über den Halbleiterschalter oder ein Relais. Zwischen dem Stromsensor und dem Trennelement sind die weiteren Komponenten der elektronischen Sicherungsschaltung vorgesehen und miteinander gekoppelt und/oder verschaltet.

Durch den im Stromzufuhrweg fließenden Strom wird ein Magnetfeld erzeugt und in den Wicklungen des Stromsensors hierdurch eine Wechselspannung induziert. Die Wechselspannung ist zu dem fließenden Strom proportional und kann durch eine Gleichrichtung in der Einrichtung zum Erzeugen einer Ist-Gleichspannung zu der dem fließenden Strom proportionalen Ist-Gleichspannung gleichgerichtet werden. Die Einrichtung kann insbesondere einen Verstärker und eine Gleichrichterschaltung umfassen, um die induzierte Wechselspannung zunächst zu verstärken und nachfolgend gleichzurichten.

Diese dem Strom proportionale Ist-Spannung wird der Vergleichereinrichtung zugeführt. Dieser wird ferner an einem weiteren Eingang ein Schwellenwert eingegeben bzw. vorgegeben, so dass die Vergleichereinrichtung den Ist- Spannungswert mit dem Schwellenwert vergleicht. Sowohl der, der Vergleichereinrichtung zugeführte Ist-Spannungswert, als auch der dieser zugeführte Schwellenwert ist ein Gleichspannungswert.

Das der Vergleichereinrichtung nachgeschaltete bistabile Relais wird bei Überschreiten eines vorgebbaren oder vorgegebenen Schwellenwerts bzw. Maximalwerts der Spannung geschaltet. Hierdurch wird das dem bistabilen Relais nachgeschaltete Schaltelement, insbesondere ein Relais oder Halbleiterschalter ebenfalls dahingehend angesteuert, dass dieses den Stromzufuhrweg unterbricht, um den nachgeschalteten Verbraucher in Form des zumindest einen elektronischen Gerätes, insbesondere z.B. HiFi-Gerätes, vor einem Überstrom zu schützen.

Um eine Zeitverzögerung nach Art einer Ansprechzeit einer trägen Sicherung, wie einer Feinsicherung des Standes der Technik, vorzusehen, ist die zumindest eine Einrichtung zum Erzeugen einer Ansprechverzögerung der elektronischen Sicherungsschaltung vorgesehen und dem bistabilen Relais vorgeschaltet. Durch zumindest eine Komponente dieser Einrichtung zum Erzeugen einer Zeitverzögerung kann auch ein unbeabsichtigtes Schalten des bistabilen Relais bei Einschwingvorgängen der Betriebsspannung beim Einschalten der elektronischen Sicherungsschaltung verhindert werden. Durch den Einsatz eines bistabilen Relais verbleibt die elektronische Schutzschaltung so lange in dem inaktiven Zustand, bis durch Betätigen einer vorteilhaft vorgesehenen Rücksetzeinrichtung diese wieder in seinen Ausgangszustand versetzt wird.

Die elektronische Sicherungsschaltung wird somit nach Ansprechen des bistabilen Relais in einen inaktiven Zustand versetzt und ist durch Betätigen einer Rücksetzeinrichtung wieder in einen aktiven Zustand versetzbar oder wird in diesen versetzt. Die Rücksetzeinrichtung kann beispielsweise eine Rücksetztaste bzw. Reset-Taste sein, die auf das bistabile Relais einwirkt. Ein Rücksetzen des bistabilen Relais erfolgt somit manuell.

Zwischen dem bistabilen Relais und dem Schaltelement ist vorteilhaft eine Einrichtung zur galvanischen Trennung, insbesondere ein Optokoppler, geschaltet, wobei dieses, das bistabile Relais in einen deaktivierten Zustand versetzt und hierüber das Schaltelement aktiviert. Hierüber ist somit eine galvanische Trennung der elektronischen Sicherungsschaltung von dem Verbraucher in Form des zumindest einen elektronischen Geräts, insbesondere z.B. HiFi-Geräts, bzw. dem in den Stromzufuhrweg zu dem Verbraucher eingekoppelten Schaltelements gegeben.

Anstelle eines Optokopplers kann auch ein anderes, eine galvanische Trennung ermöglichendes Element, zwischen dem bistabilen Relais und dem Halbleiterschalter angeordnet sein, das eine gute Proportionalität von Eingangs- und Ausgangsstrom seines Ein- und Ausgangs aufweist und somit zur optimalen Übertragung des von dem bistabilen Relais kommenden Signals in Richtung des Schaltelements ermöglicht.

Vorteilhaft ist, dass der Messstromkreis durch den oben genannten Optokoppler oder ein anderes geeignetes Übertragungselement, und den durch eine Sicherung/Schutzelement geschützten Transformator zur Hilfsspannungserzeugung eine galvanische Entkopplung des Messstromkreises vom Laststromkreis erfolgt. Bei einem Ansprechen des Sicherungselementes vor dem Transformator erhält der Optokoppler keinen Betriebsstrom mehr, so dass auch der Halbleiterschalter oder das Relais sperrt und den Stromfluss zum Verbraucher dauerhaft unterbricht.

Weiter vorteilhaft ist die Einrichtung zum Erzeugen einer Zeitverzögerung. Diese ist der Vergleichereinrichtung nachgeschaltet, und enthält einen ersten Tiefpass, in Form eines ersten RC-Gliedes und nachfolgend ein Schwellwertschalter-NAND-Glied, insbesondere ein Schmitt-Trigger-NAND.

Durch die Verwendung zweier hintereinander geschalteten NAND-Glieder ergibt sich nur dann, wenn an beiden Eingängen des ersten Schwellwertschalter-NANDs ein Signal anliegt, am Ausgang des zweiten Schwellwertschalter-NANDs ein "1"- Signal, in allen anderen Fällen ein "0"-Signal. An dem einen Eingang des Schwellwertschalter-NANDs liegt der durch den ersten Tiefpass bzw. das erste RC-Glied gefilterte Ausgangswert der Vergleichereinrichtung an. An dem zweiten Eingang liegt vorteilhaft das Signal eines zweiten Tiefpasses, wie eines zweiten RC-Gliedes, an. Dieses ist mit der Betriebsspannung verbunden. Damit verzögert es das Aktivierens des Schwellwertschalter-NANDs, insbesondere Schmitt-Trigger-NANDs, und Verhindern damit ein unbeabsichtigtes Triggern der elektronischen Sicherungsschaltung durch Einschwingvorgänge der Betriebsspannung der elektronischen Sicherung beim dessen Einschalten. Insgesamt ist damit ein einstellbar verzögertes und störungsunempfindliches Ansteuern des nachgeschalteten bistabilen Relais möglich.

Als weiter vorteilhaft erweist es sich, wenn die Schwellen-Spannung, die der Vergleichereinrichtung als Schwellen-Spannungswert eingegeben wird, einer gewünschten Schaltschwelle der elektronischen Sicherungsschaltung entspricht. Als besonders vorteilhaft erweist es sich, wenn die Schaltschwelle der elektronischen Sicherungsschaltung zur Anpassung an die Charakteristik des jeweiligen durch die elektronische Sicherungsschaltung abzusichernden elektronischen Gerätes, insbesondere z.B. HiFi-Geräts, auf wählbare Strom-Nennwerte einstellbar ist, zum Beispiel auf Strom-Nennwerte von 0,1 bis 6 A. Beispielsweise ist ein Einstellen auf Sicherungs-Nennwerte von 0,1 A, 0,2A, 0,5A, 1 A, 2A, 4A oder 6A möglich. Die Abschaltzeit der elektronischen Sicherungsschaltung entspricht vorteilhaft der Abschaltzeit einer trägen Sicherung und kann beispielsweise 0,1 s bis 0,2s betragen. Die Abschaltzeit ist vorteilhaft einstellbar, um verschiedene Sicherungscharakteristiken nachbilden zu können. Durch diese Verzögerung wird gleichzeitig ein unbeabsichtigtes Ansprechen der elektronischen Sicherungsschaltung durch den Einschaltstrom des angeschlossenen elektronischen Gerätes vermieden.

Mit der elektronischen Sicherungsschaltung ist somit sowohl ein deutlich verbesserter Schutz des angeschlossenen elektronischen Gerätes im Fehlerfalle als auch, bei zusätzlichem Ersatz der geräteinternen Feinsicherung durch einen widerstandsarmen Metallstift, eine deutlich verbesserte Musikwiedergabe bei einem z.B. HiFi-Gerät möglich. Im Vergleich zu einer Feinsicherung weist die elektronische Sicherungsschaltung einen minimalen Durchgangswiderstand auf, der dementsprechend zu einer gegenüber der Verwendung einer Feinsicherung deutlich verbesserten Musikwiedergabe seitens des HiFi-Gerätes führt.

Als weiter vorteilhaft erweist es sich, dass die Stromabschaltschwelle mit einer Genauigkeit von wenigen Prozent sehr exakt definiert wird und einen weitreichenden Schutz des elektronischen Gerätes, wie eines HiFi-Gerätes, ermöglicht und dieses damit effektiv vor Beschädigungen schützt.

Nach dem einmaligen Ansprechen der elektronischen Sicherungsschaltung bleibt diese, wie erwähnt, in einem inaktiven Zustand, bis sie durch das Betätigen der Rücksetzeinrichtung wieder aktiviert wird. Um den jeweiligen Betriebszustand mitzuteilen, kann beispielsweise eine grüne Leuchtdiode vorgesehen sein, um den aktiven Zustand und eine rote, um den inaktiven Zustand anzuzeigen.

Die beschriebenen Schaltungsoptionen lassen sich natürlich auch unmittelbar in ein elektronisches Gerät integrieren. Daher soll die Anwendung der Schaltung nicht notwendigerweise auf ein Verfahren zur Nachrüstung bekannter Geräte beschränkt sein, auch eine unmittelbare Verwendung innerhalb von elektronischen Schaltungen oder Geräten ist denkbar.

Der erfindungsgemäße Nachrüstsatz zur Durchführung des Verfahrens weist zum einen das Überbrückungselement auf, dass in die Kontaktaufnahme für die auszutauschen Feinsicherung eingesetzt werden kann. Wie oben bereits dargelegt, ist die elektronische Sicherungsschaltung bevorzugt in einem Gehäuse untergebracht, welches separat von dem elektronischen Gerät vorgesehen ist.

Das Gehäuse der elektronischen Sicherungsschaltung kann so ausgebildet sein, dass es fest mit dem Gehäuse des elektronischen Gerätes verbunden werden kann. Hierzu kann das Gehäuse der elektronischen Sicherungsschaltung entweder eine universelle Befestigungsplatte aufweisen oder sonstige Mittel besitzen, über die es mit dem Gehäuse des elektronischen Gerätes verbunden werden kann. Viele elektronische Geräte weisen beispielsweise ein Gehäuse auf, das an seiner Rückseite nicht nur den Eingang der Spannungsversorgung sondern auch Schrauben aufweist. In diesem Fall können diese Schrauben benutzt werden, um das Gehäuse der elektronischen Sicherungsschaltung mit dem Gehäuse des elektronischen Gerätes zu verschrauben.

Natürlich kann bei entsprechendem Interesse auch für ein spezielles Gerät oder für mehrere spezielle Geräte in individuell auf das elektronische Gerät abgestimmtes Gehäuse verwendet werden, dass den Anschlussmöglichkeiten und -maßen Rechnung trägt und zum Beispiel mit dem Gehäuse des elektronischen Geräte verschraubt werden kann.

Das Anschlusskabel für die Spannungsversorgung kann in das Gehäuse der elektronischen Sicherungsschaltung eingesteckt oder eingeführt werden. Besonders vorteilhaft ist es, wenn das Gehäuse der elektronischen Sicherungsschaltung so ausgebildet ist, dass das Anschlusskabel in ein Fach oder in das Innere des Gehäuses eingeführt werden kann und dort mit einer Buchse verbunden werden kann. Anschließend wird das Fach oder das Gehäuse möglichst fest verschlossen, so dass sichergestellt ist, dass das Anschlusskabel nicht irrtümlich von der elektronischen Sicherungsschaltung gelöst wird. Das Gehäuse der elektronischen Sicherungsschaltung weist in diesem Fall dann entweder ein eigenes Anschlusskabel zum Verbinden mit einer Steckdose auf oder besitzt eine Buchse, über die es mit der Stromversorgung verbunden werden kann.

Insbesondere dann, wenn das Anschlusskabel lösbar mit dem elektronischen Gerät verbunden ist, ist es auch denkbar das ursprüngliche Anschlusskabel zur Verbindung des Gehäuses der elektronischen Sicherungsschaltung mit der Steckdose zu verwenden. Das Gehäuse der elektronischen Sicherungsschaltung kann dann wiederum mit einem wesentlich kürzeren Kabel mit dem Gehäuse des elektronischen Gerätes verbunden werden.

Die Verbindung des Gehäuses der elektronischen Sicherungsschaltung mit dem Gehäuse des elektronischen Gerätes kann auch über eine Klebeverbindung oder zum Beispiel selbstschneidende Gewindeschrauben erfolgen. In beiden Fällen kann die Anlagefläche, mit der das Gehäuse der elektronischen Sicherungsschaltung an dem Gehäuse des elektronischen Gerätes anliegt, eine Durchgangsöffnung aufweisen, durch die das Kabel des elektronischen Gerätes in das Gehäuse der elektronischen Sicherungsschaltung eingeführt werden kann oder durch die eine eventuell am Gehäuse des elektronischen Gerätes vorhandene Anschlussbuchse für das Stromkabel zugänglich bleibt.

Die feste Verbindung des Gehäuses der elektronischen Sicherungsschaltung mit dem Gehäuse des elektronischen Gerätes hat den besonderen Vorteil, dass die Kabelverbindung zwischen der elektronischen Sicherungsschaltung und dem elektronischen Gerät nicht so einfach gelöst werden kann. Für den Benutzer ergibt sich somit der Eindruck, als würde das Anschlusskabel der elektronischen Sicherungsschaltung bzw. deren Anschlussbuchse der reguläre Anschluss für das elektronische Gerät sein. Dies vermeidet, dass der Benutzer aus Versehen bei einer Neuverkabelung die elektronische Sicherungsschaltung mit einem anderen Gerät verbindet, weil er beispielsweise die hinter einem HiFi-Rack oder -Schrank befindlichen Kabel falsch zuordnet. Letzteres wäre fatal, da ja die Feinsicherung überbrückt ist und das Gerät somit nicht mehr abgesichert wäre.

Eine weitere Möglichkeit zur Verhinderung einer Umgehung der elektronischen Sicherungsschaltung besteht darin, dass die Buchse zum Anschließen des Netzkabels am Gehäuse des elektronischen Gerätes oder das Netzkabel des elektronischen Gerätes, wenn dieses Fest mit dem Gehäuse verbunden ist, mit einem Adapterstück versehen wird, das fest mit dem Gehäuse der Buchse verbunden ist und nicht in eine handelsübliche Steckdose, jedoch mit einem Anschluss der elektronischen Sicherungsschaltung zusammenpasst. Die ist eine besonders einfache Möglichkeit, über die mechanische Passung zu verhindern, dass der Benutzer nach längerer Zeit das Kabel zwischen der elektronischen Sicherungsschaltung und dem elektronischen Gerät abzieht und trotz dem Überbrücken der Feinsicherung das elektronische Gerät unmittelbar unter Umgehung der elektronischen Sicherungsschaltung mit der Netzspannung verbindet.

Eine weitere, jedoch auch aufwändigere Lösung gegen Betreiben des elektronischen Gerätes unter Umgehung der elektronischen Sicherungsschaltung besteht darin, dass die elektrische Überbrückung der Feinsicherung und die elektronische Sicherungsschaltung miteinander logisch oder elektronisch verbunden werden, so dass die elektronische Sicherungsschaltung über eine Eigenlogik erkennen kann, dass die elektrische Überbrückung in die Aufnahme der ursprünglichen Feinsicherung eingesetzt ist, gleichzeitig aber auch die elektrische Überbrückung, die anstelle der Feinsicherung nun den Strom weiterleitet, so ausgebildet ist, dass sie diese Weiterleitung nur dann vornimmt, wenn die elektronische Sicherungsschaltung vorhanden ist.

Hierzu kann beispielsweise die elektronische Überbrückung von einem in die Kontaktaufnahme einsetzbaren Element gebildet sein, das den Strom von einem der beiden Kontakte abgreift, zu einem von der elektronischen Sicherungsschaltung schaltbaren Schalter führt und von dem Schalter zu dem gegenüberliegenden Kontakt zurückführt, wobei die beiden genannten Kontakte diejenigen Kontakte sind, die ansonsten von der Feinsicherung verbunden würden. Der Schalter ist dabei so ausgebildet, dass er ohne Verbindung mit der elektronischen Sicherungsschaltung den Stromfluss nicht durchschaltet.

Erst durch ein anliegendes Kontrollsignal, das die elektronische Sicherungsschaltung bereitstellt, wird der Schalter dann auf Durchlass geschaltet. Verwendet der Benutzer nun ein anders Anschlusskabel, fehlt ihm der Anschluss des Kontrollkabels zur elektrischen Überbrückung, so dass an der elektrischen Überbrückung kein Signal anliegt, das veranlasst, dass die Überbrückung auf Durchlass schaltet. Auf diese Weise wird effektiv vermieden, dass das elektronische Gerät ohne Zwischenschaltung der elektronischen Sicherung betrieben wird.

Zur zusätzlichen Absicherung kann die elektronische Sicherung entweder das Durchlasssignal nur dann auf das Kontrollkabel geben, wenn sie selbst stromdurchflossen ist. Dies vermeidet, dass der Benutzer zwar das Kontrollkabel anschließt, dennoch aber ein anderes Stromkabel ohne Sicherung an das elektronische Gerät abschließt Zu weiteren Absicherung kann die elektronische Sicherung auch den Stromfluss durch sie selbst einerseits und durch die elektrische Überbrückung andererseits miteinander vergleichen. Hierzu wird über eine geeignete Vergleichsschaltung der Stromfluss in beiden Bauteilen ermittelt und das Kontrollkabel nur dann mit dem Freigabesignal für den Schalter zum Durchlass der Netzspannung in der elektrischen Überbrückung beaufschlagt, wenn ein gleicher Stromfluss ermittelt wird.

Zur näheren Erläuterung der Erfindung wird im Folgenden ein Ausführungsbeispiel der elektronischen Sicherungsschaltung anhand der Zeichnungen näher beschrieben. Die Zeichnungen zeigen in:
- Figur 1: eine Prinzip-Skizze einer erfindungsgemäßen elektronischen Sicherungsschaltung und in
- Figur 2: eine grafische Darstellung des erfindungsgemäßen Schaltverhaltens der elektronischen Sicherungsschaltung im Vergleich zu einer Standardsicherung.

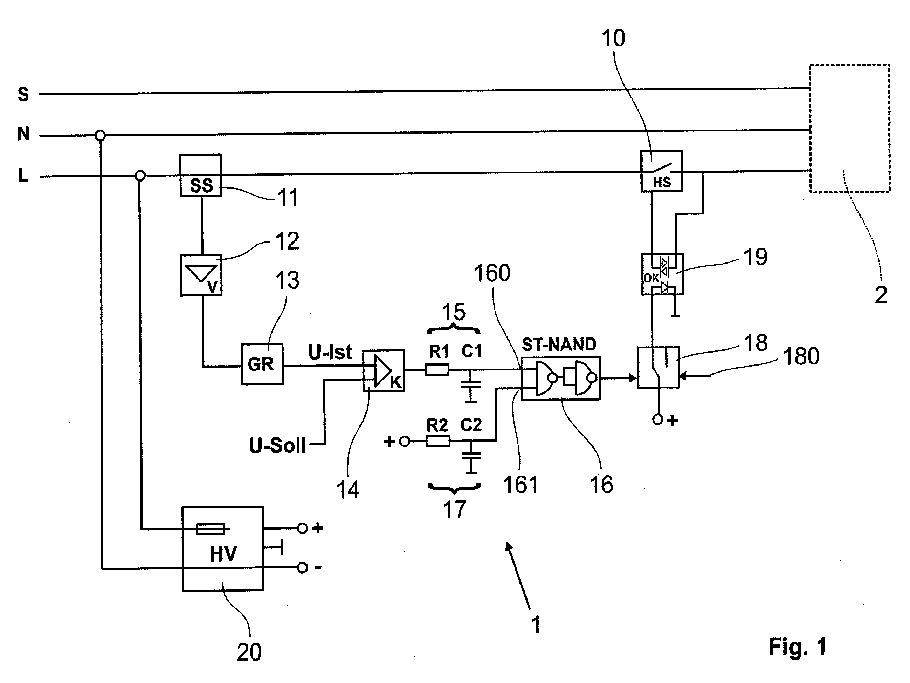

Figur 1 zeigt eine Prinzip-Skizze einer elektronischen Sicherungsschaltung 1. Diese ist angekoppelt an ein dreiphasiges Netz mit einer Phase L, einem Nullleiter N und einem Schutzleiter S. Im Strömweg hinter der elektronischen Sicherungsschaltung 1 ist ein Verbraucher 2 an das dreiphasige Netz angeschlossen. Der Verbraucher 2 kann beispielsweise ein elektronisches Gerät in Form eines HiFi-Gerätes sein. Die elektronische Sicherungsschaltung dient der Überstromabschaltung durch Unterbrechen der Phase L zum Schutz des Verbrauchers 2. Zu diesem Zweck weist die elektronische Sicherungsschaltung 1 einen Halbleiterschalter 10 auf, der in Figur 1 mit HS abgekürzt ist. Denkbar ist an dieser Stelle auch ein Relais. Durch den Halbleiterschalter 10 ist ein Unterbrechen der Phase L und somit der Stromzufuhr zu dem Verbraucher 2 möglich.

Um feststellen zu können, ob ein Überstrom vorliegt und dementsprechend den Verbraucher 2 beschädigen könnte, greift die elektronische Sicherungsschaltung 1 über einen Stromsensor 11, in Figur 1 abgekürzt mit "SS", den aktuell fließenden Strom im Bereich der Phase L ab. Der in der Phase L fließende Strom erzeugt ein Magnetfeld, das in den Wicklungen des Stromsensors 11 eine Wechselspannung induziert. Diese ist zu dem fließenden Strom proportional. In einem, dem Stromsensor nachgeschalteten Verstärker 12 wird diese Wechselspannung verstärkt und zu einer Gleichrichterschaltung 13, die dem Verstärker 12 nachgeschaltet ist, geführt.

In Figur 1 ist der Verstärker mit V und die Gleichrichterschaltung mit GR abgekürzt. Die Gleichrichterschaltung 13 erzeugt aus der Wechselspannung, eine dem in der Phase L fließenden Strom proportionale Gleichspannung und wird als Ist-Gleichspannung einem Komparator 14, der der Gleichrichterschaltung 13 nachgeschaltet ist, zugeführt. Der Komparator 14 ist in Figur 1 mit K abgekürzt und die Ist-Gleichspannung mit U-Ist. Im Komparator 14 wird die Ist-Gleichspannung mit einer Schwellen-Gleichspannung verglichen.

Die Schwellen-Spannung ist in Figur 1 mit U-Soll abgekürzt. Die Schwellen-Spannung entspricht einer gewünschten Schaltschwelle der elektronischen Sicherungsschaltung 1 und kann insbesondere entsprechend gewünschter Abschaltschwellen eingestellt werden. Diese betragen beispielsweise Werte von 0,1 A bis 6 A. Dem Komparator 14 nachgeschaltet ist ein Tiefpass, gebildet durch einen Widerstand R1 und einen parallel dazu geschalteten Kondensator C1, also ein erstes RC-Glied. Dem Tiefpass 15 nachgeschaltet ist ein Schmitt-Trigger-NAND 16. Durch die Kombination aus dem Tiefpass 15 und den Schwellwertschalter- NAND bzw. Schmitt-Trigger-NAND-Glied 16 wird eine definierte Zeitverzögerung erzeugt, die beispielsweise auf 0,1 bis 0,2 s eingestellt bzw. festgelegt werden kann, somit einen Zeitverzögerungswert, der etwa der Ansprechzeit einer trägen Sicherung des Standes der Technik entspricht. Vorteilhaft ist, dass über das RC-Glied 16 auch anderer Sicherungscharakteristiken eingestellt werden können.

Der erste Tiefpass 15, umfassend den Widerstand R1 und den Kondensator C1, liegt an einem ersten Eingang 160 des Schmitt-Trigger-NANDs. An dem zweiten Eingang 161 von diesem liegt ein zweiter Tiefpass 17. Der zweite Tiefpass 17 umfasst einen Widerstand R2 und einen zu diesem parallel geschalteten Kondensator C2, also wiederum ein RC-Glied. Dieser Tiefpass bzw. das RC-Glied dient dazu, ein unbeabsichtigtes Triggern des Schmitt-Trigger-NANDs 16 durch Einschwingvorgänge der Betriebsspannung beim Einschalten der Elektronischen Sicherungsschaltung zu verhindern.

Der Schmitt-Trigger-NAND-Schaltung 16 ist ein bistabiles Relais 18 nachgeschaltet. Übersteigt der an der Phase L anliegende Strom einen vorgebbaren Maximalstrom, wird dies im Komparator durch den Schwellen/Ist- Spannungs-Vergleich festgestellt, wodurch durch das Schmitt-Trigger-NAND 16 an das bistabile Relais 18 ein Signal zum Umschalten gegeben wird. Dem bistabilen Relais 18 nachgeschaltet ist ein Optokoppler 19, in Figur 1 mit OK abgekürzt, der durch das Umschalten des bistabilen Relais 18 deaktiviert wird. Dem Optokoppler 19 nachgeschaltet ist das Trennelement 10, insbesondere wie dargestellt ein Halbleiterschalters oder Relais. Dieser wird durch den Optokoppler 19 angesteuert und sperrt bzw. unterbricht die Stromzufuhr zu dem Verbraucher 2 durch Trennen der Phase L. Dies ist in Figur 1 angedeutet. Das bistabile Relais 18 verbleibt so lange in dem umgeschalteten Zustand, bis über eine im Bereich des bistabilen Relais vorgesehene Rücksetztaste 180 das bistabile Relais 18 wieder in seinen Ausgangszustand zurückgesetzt und dementsprechend die elektronische Sicherungsschaltung wieder aktiviert wird. Aufgrund des Zurücksetzens des bistabilen Relais 18 wird auch der Optokoppler 19 wieder aktiviert, der wiederum entsprechend das Trennelement 10 ansteuert. Dieser schließt und ermöglicht hierdurch wiederum den Stromfluss in Richtung des Verbrauchers.

Wie Figur 1 weiter entnommen werden kann, ist zudem eine Hilfsspannungserzeugung 20, für die Versorgung der elektronischen Sicherungsschaltung, in Figur 1 abgekürzt mit HV, vorgesehen und an den Nullleiter N und die Phase L angeschlossen.

Wie dem Aufbau der elektronischen Sicherungsschaltung 1 nach Figur 1 entnommen werden kann, ist diese über den Optokoppler 19, den Stromsensor 11, sowie dem Trafo der Hilfsspannungserzeugung komplett galvanisch vom Verbraucher getrennt. Beim Ansprechen der Sicherung des Hilfsspannungstrafos erhält der Optokoppler 19 auch keinen Betriebsstrom mehr, so dass auch der Halbleiterschalter 10 sperrt und den Stromfluss zum Verbraucher 2 dauerhaft unterbricht.

Der Durchlasswiderstand der elektronischen Sicherungsschaltung 1 kann inklusive einem gegebenenfalls vorgesehenen Kabel und Stecker weniger als 40 mOhm betragen. Wird eine solche elektronische Sicherungsschaltung 1 beispielsweise in ein Gehäuse eingebettet, betragen die Abmessungen hier z.B. 120 x 60 x 30 mm. Das Gewicht einer solchen elektronischen Sicherungsschaltung mit Kabel und Steckern kann beispielsweise bei etwa 770g liegen. Es ist somit möglich, eine solche elektronische Sicherungsschaltung endseitig mit Kabeln und daran angeschlossenen Steckern zu versehen und in den Stromzufuhrweg zu einem Verbraucher, wie beispielsweise einem z.B. HiFi-Gerät, zwischenzuschalten. Hierdurch ist keine Änderung des Verbrauchers 2 in Form beispielsweise eines HiFi-Gerätes erforderlich, sondern lediglich ein Zwischenfügen der elektronischen Sicherungsschaltung zwischen einer Spannungsquelle bzw. Stromquelle und dem Verbraucher. Es ist somit ohne weiteres möglich, die elektronische Sicherungsschaltung bei jedem beliebigen Verbraucher vorzusehen. Bei z.B. HiFi-Geräten ist zur Verkleinerung des Durchlasswiderstandes und damit zur Verbesserung der Musikwiedergabe der Austausch der Gerätesicherung durch einen massiven, widerstandsarmen Metallstift sinnvoll.

Neben den vorstehend beschriebenen und in den Figuren gezeigten Ausführungsformen von elektronischen Sicherungsschaltungen können noch zahlreiche weitere gebildet werden, bei denen jeweils die elektronische Sicherungsschaltung zwischen ein abzusicherndes elektronisches Gerät und dessen Spannungsversorgung geschaltet werden kann oder wird, wobei die elektronische Sicherungsschaltung zumindest einen Stromsensor und zumindest ein Schaltelement umfasst, die in den Stromzufuhrweg zu dem elektronischen Gerät bzw. Verbraucher eingekoppelt werden (können), wobei mittels des schaltenden Trennelements die Stromzufuhr zu dem elektronischen Gerät unterbrochen werden kann, wobei ferner zumindest eine Einrichtung zum Erzeugen einer dem fließenden Strom proportionalen Ist-Gleichspannung vorgesehen und dem Stromsensor nachgeschaltet ist, zumindest eine Vergleichereinrichtung zum Vergleichen dieser Ist-Gleichspannung mit einer vorgebbaren oder einstellbaren Schwellen-Spannung, zumindest eine Einrichtung zum Erzeugen einer Zeitverzögerung zum Erzeugen einer Ansprechverzögerung der elektronischen Sicherungsschaltung und zumindest ein bistabiles Relais vorgesehen sind, wobei das bistabile Relais über einen Optokoppler dem Schaltelement vorgeschaltet ist und dieses in Abhängigkeit von dem Ergebnis des Soll/Ist- Spannungs-Vergleichs in der Vergleichereinrichtung ansteuert.

### Bezugszeichenliste

- 1: Elektronische Sicherungsschaltung
- 2: Elektronisches Gerät
- 10: Halbleiterschalter
- 11: Stromsensor
- 12: Verstärker
- 13: Gleichrichterschaltung
- 14: Komparator
- 15: Erster Tiefpass
- 16: Schmitt-Trigger-NAND
- 16': Schmitt-Trigger-NAND
- 17: Zweiter Tiefpass
- 18: Bistabiles Relais
- 19: Optokoppler
- 20: Hilfsspannungserzeugung
- 160: Erster Eingang
- 161: Zweiter Eingang
- 180: Rücksetztaste
- L: Phase
- N: Nullleiter
- S: Schutzleiter
- R1: Widerstand von 15
- C1: Kondensator von 15
- R2: Widerstand von 17
- C2: Kondensator von 17
- SS: Stromschalter
- OK: Optokoppler

## Patentansprüche

1. Verfahren zur verbesserten Absicherung eines elektronischen Gerätes (2) gegen unzulässig hohe Ströme, das über einen externen, wenigstens ein Anschlusskabel aufweisenden Stromzufuhrweg (L) mit einer Spannungsquelle verbindbar ist, wobei das elektronische Gerät (2) eine austauschbare, in eine Kontaktaufnahme eingesetzte Feinsicherung aufweist, die derart zwischen das elektronische Gerät (2) und eine, dieses versorgende Spannungsversorgung (L,N,S) geschaltet ist, dass sie in einem insbesondere durch einen unzulässig hohen Strom charakterisierten Fehlerfall den Stromfluss zu dem elektronischen Gerät (2) zu unterbrechen vermag,
**dadurch gekennzeichnet, dass**
- die Feinsicherung entfernt und anstelle der Feinsicherung eine elektrische Überbrückung mit geringem elektrischen Widerstand in die Kontaktaufnahme eingesetzt wird und
- das elektronische Gerät (2) über eine externe oder interne elektronische Sicherungsschaltung (1) abgesichert wird, wobei die elektronische Sicherungsschaltung (1) außerhalb oder innerhalb des elektronischen Gerätes (2) im Stromzufuhrweges (L) angeordnet wird.

2. Verfahren zur verbesserten Absicherung eines elektronischen Gerätes (2) gegen unzulässig hohe Ströme nach Anspruch 1, **dadurch gekennzeichnet, dass** eine elektronische Sicherungsschaltung (1) verwendet wird, die eine deutlich verbesserte Abschaltcharakteristik gegenüber der Feinsicherung und damit einen erheblich verbesserten Schutz des nachgeschalteten elektronischen Gerätes (2) aufweist.

3. Verfahren zur verbesserten Absicherung eines elektronischen Gerätes (2) gegen unzulässig hohe Ströme nach Anspruch 1, **dadurch gekennzeichnet, dass** eine elektronische Sicherungsschaltung (1) verwendet wird, die einen im Vergleich zu einer Metalldraht-Sicherung einen deutlich geringeren Widerstand aufweist.

4. Verfahren zur verbesserten Absicherung eines elektronischen Gerätes (2) gegen unzulässig hohe Ströme nach Anspruch 1, Anspruch 2 oder Anspruch 3, wobei das elektronische Gerät (2) ein Hifi-Gerät ist, **dadurch gekennzeichnet, dass** eine elektronische Sicherungsschaltung (1) verwendet wird, die durch im Vergleich zu der Feinsicherung einen deutlich geringeren Widerstand aufweist, so dass sie aufgrund des besseren Stromflusses eine verbesserte Musikwiedergabe ermöglicht.

5. Verfahren zur verbesserten Absicherung eines elektronischen Gerätes (2) gegen unzulässig hohe Ströme nach Anspruch 1 oder Anspruch 2, **dadurch gekennzeichnet, dass** bei einer internen Anbringung der elektronischen Sicherung als elektrische Überbrückung ein in die Kontaktaufnahme einsetzbarer Adapter oder Kontaktblock verwendet wird.

6. Verfahren zur verbesserten Absicherung eines elektronischen Gerätes (2) gegen unzulässig hohe Ströme nach Anspruch 1 oder 2, **dadurch gekennzeichnet, dass** zur Kontrolle der sachgerechten Verkabelung eine elektronische Sicherungsschaltung (1) und eine elektrische Überbrückung verwendet werden, die zur Detektion einer korrekten Verkabelung und zum weitgehenden Ausschluss einer Fehlfunktion eine zusätzliche Sicherungsfunktion aufweist, wobei die Sicherungsfunktion darin besteht, dass die elektrische Überbrückung zusätzlich mit der elektronischen Sicherungsschaltung (1) derart elektrisch verbunden ist, dass dann, wenn der Kontaktblock nicht stromdurchflossen ist, die Verbindung mit der Spannungsversorgung (L,N,S) über einen Sicherheitsschalter unterbrochen bzw. nicht hergestellt wird.

7. Verfahren zur verbesserten Absicherung eines elektronischen Gerätes (2) gegen Überspannungen nach einem der vorhergehenden Ansprüche, **dadurch gekennzeichnet, dass** die Abschaltzeit der elektronischen Sicherungsschaltung (1) vorgegeben werden und damit unterschiedliche Sicherungscharakteristiken, insbesondere mit 0,1 bis 0,2 s die Charakteristik einer trägen Sicherung, eingestellt werden können.

8. Verfahren zur verbesserten Absicherung eines elektronischen Gerätes (2) gegen unzulässig hohe Ströme nach einem der vorhergehenden Ansprüche, **dadurch gekennzeichnet, dass** eine elektronische Sicherungsschaltung (1) verwendet wird, die zumindest einen Stromsensor (11) und zumindest ein, im erkannten Fehlerfall die Spannungszufuhr unterbrechendes, im Stromzufuhrweg (L) angeordnetes Trennelement, insbesondere einen Halbleiterschalter (10) oder ein Relais, aufweist, wobei im erkannten Fehlerfall mittels des Trennelementes die Stromzufuhr zu dem elektronischen Gerät (2) unterbrochen wird.

9. Verfahren zur verbesserten Absicherung eines elektronischen Gerätes (2) gegen unzulässig hohe Ströme nach dem vorhergehenden Anspruch, **dadurch gekennzeichnet, dass** eine elektronische Sicherungsschaltung (1) verwendet wird, die zur Erkennung des Fehlerfalls
- zumindest eine, dem Stromsensor (11) nachgeschaltete, Einrichtung (13) zum Erzeugen einer dem in Richtung des elektronischen Geräts (2) fließenden Strom proportionalen Ist-Gleichspannung (U-Ist) und
- zumindest eine Vergleichereinrichtung (14) zum Vergleichen dieser Ist-Gleichspannung (U-Ist) mit einer vorgebbaren oder einstellbaren Schwellen-Spannung (U-Soll) zur Durchführung eines Schwellen- /Ist-Spannungsvergleichs aufweist.

10. Verfahren zur verbesserten Absicherung eines elektronischen Gerätes (2) gegen unzulässig hohe Ströme nach dem vorhergehenden Anspruch, **dadurch gekennzeichnet, dass** eine elektronische Sicherungsschaltung (1) verwendet wird, die zumindest ein, in Abhängigkeit von dem Ergebnis des Schwellen/Ist-Spannungsvergleichs in der Vergleichereinrichtung (14), schaltbares oder schaltendes Bistabiles-Relais als Trennelement oder zum Schalten des Trennelementes zur Unterbrechung der Stromzufuhr zu dem elektronischen Gerät (2) aufweist.

11. Verfahren zur verbesserten Absicherung eines elektronischen Gerätes (2) gegen unzulässig hohe Ströme nach einem der drei vorhergehenden Ansprüche, **dadurch gekennzeichnet, dass** eine elektronische Sicherungsschaltung (1) verwendet wird, die zumindest eine Einrichtung (15, 16, 17) zum Erzeugen einer Ansprechverzögerung der elektronischen Sicherungsschaltung (1) aufweist.

12. Verfahren zur verbesserten Absicherung eines elektronischen Gerätes (2) gegen unzulässig hohe Ströme nach einem der drei vorhergehenden Ansprüche, **dadurch gekennzeichnet, dass** eine elektronische Sicherungsschaltung (1) verwendet wird, die einen, von dem den das elektronische Gerät (2) mit der Spannungsversorgung verbindenden Verbraucherkreis galvanisch durch eine Übertragungseinheit getrennten Messkreis aufweist, wobei die Übertragungseinheit insbesondere von einem oder mehreren Optokopplern gebildet ist.

13. Verfahren zur verbesserten Absicherung eines elektronischen Gerätes (2) gegen unzulässig hohe Ströme nach einem der drei vorhergehenden Ansprüche, **dadurch gekennzeichnet, dass** eine elektronische Sicherungsschaltung (1) verwendet wird, die nach Ansprechen des bistabilen Relais (18) in einen inaktiven Zustand versetzt wird und in diesen verbleibt.

14. Verfahren zur verbesserten Absicherung eines elektronischen Gerätes (2) gegen unzulässig hohe Ströme nach dem vorhergehenden Anspruch, **dadurch gekennzeichnet, dass** eine elektronische Sicherungsschaltung (1) verwendet wird, die eine Rücksetzeinrichtung (180) aufweist, wobei die elektronische Sicherungsschaltung (1) durch Betätigen der Rücksetzeinrichtung (180) wieder in einen aktiven Zustand versetzbar ist oder versetzt wird.

15. Verfahren zur verbesserten Absicherung eines elektronischen Gerätes (2) gegen unzulässig hohe Ströme nach einem der vorhergehenden Ansprüche, **dadurch gekennzeichnet, dass** eine elektronische Sicherungsschaltung (1) verwendet wird, die derart ausgebildet ist, dass die Spannungs- und/der Strommessung, sowie die weitere Auswertung des hierüber gewonnenen Messsignals und die Schaltung des Trennelementes berührungslos und galvanisch getrennt vom Stromkreis des elektrischen Gerätes (2) erfolgt.
